# EUROPÄISCHE PATENTSCHRIFT

(11) **EP 3 942 641 B1**
(45) Veröffentlichungstag und Bekanntmachung des Hinweises auf die Patenterteilung: **14.06.2023**
(21) Anmeldenummer: 20719605.6
(22) Anmeldetag: 14.04.2020
(51) Int. Cl.: H01M 10/04, H01M 10/052, B65H 29/40, B65H 31/34

(54) **VERFAHREN UND VORRICHTUNG ZUR HERSTELLUNG EINES ELEKTRODENSTAPELS**
METHOD AND APPARATUS FOR PRODUCING AN ELECTRODE STACK
PROCÉDÉ ET DISPOSITIF POUR PRODUIRE UN EMPILEMENT D'ÉLECTRODES

(30) Priorität: 15.04.2019 DE 102019205427
(43) Veröffentlichungstag der Anmeldung: 26.01.2022
(73) Patentinhaber: VOLKSWAGEN AG, 38440 Wolfsburg (DE)
(72) Erfinder: BÖHM, Dennis, 38302 Wolfenbüttel (DE); BREUER, Alexander, 29227 Celle (DE); JORDAN, Marco, 38229 Salzgitter (DE); FREIFRAU VON BOESELAGER, Christina, 38102 Braunschweig (DE); LEITHOFF, Ruben, 29664 Walsrode (DE); FRÖHLICH, Arian, 31559 Haste (DE)
(74) Vertreter: FDST Patentanwälte
(86) Internationale Anmeldenummer: PCT/EP2020/060412
(87) Internationale Veröffentlichungsnummer: WO 2020/212317

(56) Entgegenhaltungen:
- EP-A1- 2 696 428
- JP-A- S5 469 729
- US-A1- 2015 052 741

## Beschreibung

Die Erfindung betrifft ein Verfahren sowie eine Vorrichtung zur Herstellung eines Elektrodenstapels aus Monozellen für eine Lithium-Ionen-Batterie.

Eine solche Lithium-Ionen-Batterie weist zumindest eine Batteriezelle auf, in welcher ein Elektrodenstapel mit einer Anzahl an blattartigen Kathoden (Kathodenblättern, Kathodenfolien) und blattartigen Anoden (Anodenblättern, Anodenfolien) aufgenommen ist, wobei die Kathoden und die Anoden beispielsweise übereinander gestapelt sind, und wobei zwischen den Kathoden und den Anoden jeweils ein Separator angeordnet ist.

Der Elektrodenstapel mit übereinandergestapelten Anoden und Kathoden wird beispielsweise mittels des sogenannten Einzelblattstapelns hergestellt. Typischerweise werden die einzelnen Anoden und die Kathoden hierbei mittels eines Greifersystems (Greifsystems) bewegt. Ein Greifer dieses Greifersystems nimmt die jeweilige Elektrode, also die jeweilige Anode oder Kathode, auf, fördert diese haltend an einen Stapelort und legt die Elektrode dort ab. Allerdings sind solche Greifersysteme vergleichsweise langsam. Infolgedessen ist der Herstellungsprozess eines solchen Elektrodenstapels nachteilig vergleichsweise zeitaufwändig.

US 2015/052741 A1, EP 2 696 428 A1 und JP S54 69729 A offenbaren Herstellungsprozesse von Elektrodenstapeln.

Der Erfindung liegt die Aufgabe zugrunde, ein besonders geeignetes Verfahren sowie eine Vorrichtung zur Herstellung eines Elektrodenstapels für eine Lithium-Ionen-Batterie anzugeben. Insbesondere soll mittels des Verfahrens und/oder mittels der Vorrichtung eine möglichst zeitsparende Herstellung des Elektrodenstapels realisiert sein.

Bezüglich des Verfahrens wird die genannte Aufgabe durch die Merkmale des Anspruchs 1 und hinsichtlich der Vorrichtung durch die Merkmale des Anspruchs 4 erfindungsgemäß gelöst. Vorteilhafte Weiterbildungen und Ausgestaltungen sind Gegenstand der Unteransprüche. Dabei gelten die Ausführungen im Zusammenhang mit der Vorrichtung sinngemäß auch für das Verfahren und umgekehrt.

Bei dem Verfahren zur Herstellung eines Elektrodenstapels aus Monozellen für eine Lithium-Ionen-Batterie (Li-Ionen-Batterie), werden in einem ersten Schritt die Monozellen in Aufnahmen eines rotatorische angetriebenen oder eines rotatorisch antreibbaren Stapelrads gefördert. Dabei werden die Aufnahmen auch als Fach oder als Tasche und das Stapelrad auch als Förderrad bezeichnet. Vorzugsweise rotiert das Stapelrad mit einer konstanten Drehgeschwindigkeit.

Eine Monozelle ist dabei mittels einer (einzigen) Anode und einer (einzigen) Kathode gebildet, wobei zwischen der Anode und der Kathode ein Separator (eine Separatorfolie) angeordnet ist. Weiterhin ist auf der der Anode abgewandten Seite der Kathode ein weiterer Separator angeordnet. Vorzugsweise sind die Anode, die Kathode sowie die Separatoren, insbesondere mittels Laminieren, miteinander gefügt.

Zweckmäßigerweise wird in jeder der Aufnahmen lediglich eine einzige Monozelle aufgenommen. Die Monozellen werden dabei insbesondere derart in die Aufnahmen gefördert, dass in einer Umfangsrichtung (Umlaufrichtung) des Stapelrads die Anoden und die Kathoden der Monozellen alternierend angeordnet sind.

Die Anoden und die Kathoden der Monozelle werden zusammenfassend auch als Elektroden bezeichnet. Diese sind insbesondere blattförmig ausgebildet. Die Elektroden weisen also in einer Raumrichtung eine vergleichsweise kleine Ausdehnung auf, mit anderen Worten sind die Elektroden flächig ausgebildet. Die Elektroden werden auch als Elektrodenblätter (sheets), die Anoden und die Kathoden entsprechend als Anodenblätter bzw. Kathodenblätter bezeichnet. Die Anoden und die Kathoden weisen zweckmäßigerweise jeweils eine auch als Tab bezeichnete elektrische Kontaktierung auf, welche mittels eines (Zellableiters) Stromableiters der jeweiligen Elektrode gebildet ist. Insbesondere ist die Kontaktierung der Anode an einer (Stirn-)Seite der Monozelle angeordnet, welche parallelen und gegenüberliegend zu derjenigen (Stirn)-Seite der Monozelle angeordnet ist, an welcher die Kontaktierung der Kathode angeordnet ist.

In einem zweiten Schritt werden die in den Aufnahmen aufgenommenen Monozellen, also die in die Aufnahmen geförderten Monozellen, anhand der Rotation des Stapelrads zu einem Stapelfach gefördert. Also werden die Monozellen mittels des Stapelrads geführt zum Stapelfach hin bewegt.

In einem dritten Schritt werden die Monozellen, insbesondere mittels eines oder mittels zwei, vorzugsweise feststehenden, Abstreifarmen im Bereich des Stapelfachs gehalten. Aufgrund der Rotation des Stapelrads werden die Monozellen aus der jeweiligen Aufnahme heraus und in das Stapelfach geführt. Mit anderen Worten werden die Monozellen mittels des Abstreifarms bzw. mittels der Abstreifarme gegen die Rotation des Stapelrads gehalten (gestützt), sodass die jeweilige Aufnahme aufgrund der Rotation des Stapelrads relativ zur zugeordneten Monozelle verstellt und entsprechend die Monozelle aus der jeweiligen Aufnahme in das Stapelfach überführt wird. Dabei werden die Monozellen im Stapelfach gestapelt.

Insbesondere wird aufgrund der Rotation des Stapelrads eine Luftströmung erzeugt, welche das Überführen der Monozellen aus der jeweiligen Aufnahme in das Stapelfach unterstützt. Insbesondere werden die Monozellen aufgrund dessen in das Stapelfach gedrückt.

In einem vierten Schritt werden unter Bildung des Elektrodenstapels die gestapelten Monozellen im Stapelfach gegeneinander verpresst. Zweckmäßigerweise werden die gegeneinander verpressten Monozellen anschließend mittels eines Separatorbandes fixiert, insbesondere umwickelt.

Im Vergleich zu einem ungeführten Absinken der Monozellen lediglich aufgrund der Schwerkraft erfolgt das Fördern der Monozellen mittels des Stapelrads in das Stapelfach vergleichsweise schnell. Weiterhin ist mittels des Stapelrads eine vergleichsweise genaue und definierte Positionierung der Monozellen übereinander realisiert. Des Weiteren werden die Monozellen mittels des Stapelrads greiferlos, also ohne die Verwendung eines Greifers oder einer Greifvorrichtung in das Stapelfach überführt. Vorteilhaft erfolgt aufgrund dessen das alternierende Stapeln der Monozellen, insbesondere im Vergleich zu der eingangs erwähnten Herstellung des Elektrodenstapels mittels einer Greifvorrichtung, vergleichsweise schnell, also zeitsparend. Somit ist eine Prozessrate der Herstellung des Elektrodenstapels vorteilhaft erhöht, mit anderen Worten ist ein Durchsatz erhöht.

Gemäß einer vorteilhaften Weiterbildung werden Im Zuge des ersten Schrittes mindestens zwei der Monozellen gleichzeitig in die entsprechenden Aufnahmen des Stapelrades gefördert. Insbesondere weist eine Fördereinrichtung zum Fördern der Monozellen in die Aufnahmen des Stapelrads mindestens zwei Förderbänder für die Monozellen auf.

Vorteilhaft ist eine Zeitdauer, welche für das Einbringen der Monozellen in das Stapelrad notwendig ist, vergleichsweise kurz und damit einhergehend die Herstellung des Elektrodenstapels vergleichsweise zeitsparend.

Gemäß einer zweckmäßigen Ausgestaltung des Verfahrens ist die Fördergeschwindigkeit der Monozellen in die jeweilige Aufnahme des Stapelrads derart eingestellt, dass die Monozellen zeitlich vor dem Halten durch den Abstreifarm aufgrund einer Reibung relativ zur jeweiligen Aufnahme in den Stillstand abgebremst werden. Mit anderen Worten ist dann eine Relativgeschwindigkeit der Monozellen zur jeweiligen Aufnahme gleich Null. Dabei ist zweckmäßigerweise die Fördergeschwindigkeit möglichst groß. Auf diese Weise ist ein Anschlagen der Monozellen an den Enden der Aufnahmen im Bereich der Drehachse und damit einhergehend eine Gefahr einer Beschädigung der Kathoden bzw. der Anoden der Monozellen vermieden.

Der gemäß dem Verfahren hergestellte Elektrodenstapel ist dabei insbesondere für eine Lithium-Ionen-Batterie, vorzugsweise für eine (Traktions-)Batterie eines elektrisch angetriebenen Kraftfahrzeugs, vorgesehen.

Die Vorrichtung ist zur Herstellung eines Elektrodenstapels aus Monozellen für eine Lithium-Ionen-Batterie, beispielsweise für eine (Traktions-) Batterie eines elektrisch angetriebenen Kraftfahrzeugs, eingerichtet und geeignet. Insbesondere wird der Elektrodenstapel mittels der Vorrichtung gemäß einer der oben dargelegten Varianten des Verfahrens hergestellt.

Die Vorrichtung weist ein um eine Drehachse rotatorisch antreibbares Stapelrad mit umfangsseitig eingebrachten und sich in Axialrichtung, also in einer Richtung parallel zur Drehachse, erstreckenden Aufnahmen für die Monozellen auf. Mit anderen Worten weist das Stapelrad sich nach außen hin, also von der Drehachse weg, erstreckende Arme (Schaufeln) auf, mittels denen die Aufnahmen gebildet sind. Zweckmäßigerweise erstrecken sich die Aufnahmen dabei nach außen entgegen der vorgesehenen Drehrichtung des Stapelrads. So sind die Aufnahmen gegen eine Radialrichtung bezüglich der Drehachse geneigt.

Gemäß einer ersten Variante der Vorrichtung weist das das Stapelrad weiterhin umfangsseitig eine sich in dessen Umfangsrichtung durchgehende Aussparung auf. Die Aussparung spannt also eine Ebene senkrecht zur Drehachse auf. Die Aussparung erstreckt sich durch die Aufnahmen. Mit anderen Worten durchsetzt (durchdringt) die Aussparung die Aufnahmen. Somit sind die Arme in Axialrichtung nicht durchgehend. In die Aussparung ist ein Abstreifarm als Anschlag für die in den Aufnahmen aufgenommenen Monozellen bei einer Rotation des Stapelrads, vorzugsweise feststehend, einbringbar, so dass aufgrund der Rotation des Stapelrads die Monozelle gegen eine Rotation mit dem Stapelrad gehalten werden und aus der jeweiligen Aufnahme in ein Stapelfach überführt werden. Geeigneter Weise ist dabei die Aussparung derart ausgebildet, dass ein Abstand des Abstreifarms zur Drehachse kleiner ist als das drehachsenseitige Ende der Aufnahmen.

Zusammenfassend ragt der Abstreifarm in eine in Umfangsrichtung durchgehenden Aussparung des Stapelrads hinein und ist also zumindest teilweise in der Aussparung angeordnet. Die Aussparung spannt also eine Ebene senkrecht zur Drehachse auf. Relativ zur Aufnahme verfährt der Abstreifarm im Zuge der Rotation des Stapelrads folglich durch die Aufnahme. Dabei dient der Abstreifarm als Anschlag bzw. als Stütze für die durch die Rotation des Stapelrads mitgeführten Monozellen.

Gemäß einer zweiten Variante der Vorrichtung weist diese zwei Abstreifarme auf, von denen einer bezüglich der Axialrichtung vor und der andere hinter dem Stapelrad angeordnet ist. Mit anderen Worten flankieren die beiden Abstreifarme das Stapelrad beidseitig bezüglich der Axialrichtung. Dabei weist das Stapelrad eine kleinere Ausdehnung in Axialrichtung als die mittels diesem zu fördernden oder geförderten Monozellen auf. Also ragen die geförderten Monozellen in Axialrichtung aus den Aufnahmen über das Stapelrad hinaus, so dass die Abstreifarme bei einer Rotation des Stapelrads einen Anschlag für die in den Aufnahmen aufgenommenen Monozellen bilden. Folglich werden die Monozellen aufgrund der Rotation des Stapelrads aus der jeweiligen Aufnahme in das Stapelfach überführt,

Bei beiden Varianten der Vorrichtung werden die Monozellen im Zuge deren Überführens aus den jeweiligen Aufnahmen werden, insbesondere mittels des als Anschlag wirkenden Abstreifarms bzw. mittels der als Anschlag wirkenden Abstreifarme, zueinander fluchtend im Stapelfach übereinandergestapelt. Zweckmäßigerweise weist das Stapelfach zusätzlich einen Schieber auf. Mittels diesem ist eine zueinander fluchtende Ausrichtung der Monozellenmit verbesserter Genauigkeit ermöglicht. Vorzugsweise werden die Monozellen entlang deren gesamten Umfangs zueinander fluchtend ausgerichtet. Der Schieber ist hierzu zu einer diesem gegenüberliegenden Wand des Stapelfachs oder zum Abstreifarm hin verfahrbar. Weiterhin weist das Stapelfach eine Kompressionseinheit zur Erzeugung einer, insbesondere senkrecht zu einem Boden des Stapelfachs orientierten, Presskraft auf die im Stapelfach gestapelten und zueinander fluchten ausgerichteten Monozellen auf.

Weiterhin weist die Vorrichtung eine Fördereinrichtung zum Fördern der Monozellen in die Aufnahmen des Stapelrads auf.

Bei der ersten Variante der Vorrichtung weisen die Aufnahmen geeigneter Weise endseitig bezüglich einer Richtung parallel zur Drehachse, also seitlich, jeweils eine Wandung auf. Diese verhindert dabei eine undefinierte Verstellung der Monozellen in einer Richtung entlang der Drehachse. Die Richtung entlang der Drehachse wird hier und im Folgenden auch als Axialrichtung bezeichnet.

Gemäß einer vorteilhaften Ausgestaltung beider Varianten der Vorrichtung sind die Aufnahmen in einer Ebene senkrecht zur Drehachse bogenförmig, vorzugsweise spiralförmig ausgebildet. Also weisen die Aufnahmen in dieser Ebene einen spiralförmigen oder bogenförmigen Querschnitt auf. Vorzugsweise wird dabei eine Krümmung der bogenförmigen Aufnahme von der Umfangsseite zur Drehachse hin, also mit kleiner werdendem Radialabstand zur Drehachse, größer. Aufgrund dessen wird eine Reibungskraft zwischen den Aufnahmen und den in diese geförderten Monozellen von der Umfangsseite zur Drehachse, also nach innen, größer, sodass die Monozellen zunehmend stark abgebremst werden. Somit werden die Monozellen zuverlässig zeitlich vor dem Halten der Monozellen durch den Abstreifarm bzw. durch die Abstreifarme relativ zur Aufnahme in den Stillstand abgebremst.

Gemäß einer vorteilhaften Ausgestaltung der Vorrichtung weist die Fördereinrichtung zum Fördern der Monozellen in die entsprechenden Aufnahmen mindestens zwei erste Förderbänder auf. Wie bereits im Zuge des Verfahrens dargestellt, ist es somit ermöglicht, mindestens zwei der Monozellen gleichzeitig in die entsprechenden Aufnahmen des Stapelrades zu fördern.

Bei entsprechend hohen Fördergeschwindigkeiten der Monozellen mittels des ersten Förderbandes kann ein Auftrieb der Monozellen durch die Umgebungsluft bewirkt werden, so dass die Monozellen unerwünscht vom Förderband abheben und sich unkontrolliert bewegen. Zur Vermeidung dessen ist gemäß einer zweckmäßigen Ausgestaltung der Vorrichtung für jedes der ersten Förderbänder ein parallel orientiertes zweites Förderband vorgesehen. Die zweiten Förderbänder weisen dabei zum zugeordneten ersten Förderband jeweils entgegengesetzte Umlaufrichtungen auf. Die Monozellen sind dabei zwischen dem entsprechenden ersten Förderband und dem entsprechenden zweiten Förderband eingespannt. Die Monozellen sind also in einer Richtung senkrecht zu den Fördergurten der jeweils zugeordneten ersten und zweiten Förderbänder gehalten. Somit ist eine unkontrollierte Bewegung der Monozellen im Zuge deren Förderung in die Aufnahmen des Stapelrads verhindert.

Gemäß einer vorteilhaften Weiterbildung der Vorrichtung ragen die ersten Förderbänder und/oder die zweiten Förderbänder in die Aussparung des Stapelrad oder, bei der zweiten Variante der Vorrichtung, in eine umfangsseitig angeordnete und in dessen Umfangsrichtung durchgehende Aussparung des Stapelrads hinein, sodass die Monozellen tangential in die Aufnahme gefördert werden. Mit anderen Worten sind die ersten und/oder die zweiten Förderbänder, endseitig bezüglich der Förderrichtung der Monozellen in der Aussparung des Stapelrads angeordnet. Also sind die ersten und/oder die zweiten Förderbänder bezüglich der Axialrichtung zwischen den Schaufeln des Stapelrads angeordnet. Auf diese Weise werden die Monozellen vergleichsweise lange mittels der Förderbänder geführt, und/oder es ist eine vergleichsweise hohe Fördergeschwindigkeit der Monozellen in die entsprechenden Aufnahmen und damit einhergehend eine zeitsparende Herstellung des Elektrodenstapels ermöglicht. Zweckmäßig weisen die ersten und die zweiten Förderbänder dabei in einer Richtung, welche senkrecht zur Förderrichtung und in der mittels deren Fördergurte der Förderbänder bzw. mittels der Monozellen aufgespannten Ebenen eine kleinere Ausdehnung als die Monozellen auf. Mit anderen Worten ragen die Monozellen in Förderbandquerrichtung über die Förderbänder hinaus.

Gemäß einer geeigneten Ausgestaltung der Vorrichtung ist das Stapelfach zur Entnahme des Elektrodenstapels, insbesondere zusammen mit der Kompressionseinheit vom Stapelrad weg verfahrbar und/oder um eine zur Drehachse parallele Kippachse kippbar.

Gemäß einer geeigneten Ausgestaltung weist der Schieber und/oder der Abstreifarm der Vorrichtung gemäß der ersten Variante eine (Kontaktierungs-)Aufnahme für die elektrischen Kontaktierungen der Anoden und der Kathoden der Monozellen auf. Je nach vorgesehener Ausgestaltung der Monozelle sind die elektrischen Kontaktierungen deren Anode und deren Kathode an einer gemeinsamen Seite oder alternativ gegenüberliegenden Seiten angeordnet. Sofern die elektrischen Kontaktierungen der Anoden und der Kathoden an einer gemeinsamen Seite des Elektrodenstapels angeordnet werden sollen, weist dann der Schieber oder der Abstreifarm die Kontaktierungsaufnahme auf. Sofern die Anoden und die Kathoden an gegenüberliegenden Seiten der Monozelle und entsprechend des Elektrodenstapels angeordnet werden sollen, sind die elektrischen Kontaktierungen der Anoden bezüglich deren Förderrichtung in die jeweilige Aufnahme des Stapelrads vorne und die elektrischen Kontaktierungen der Kathoden bezüglich deren Förderrichtung hinten angeordnet oder umgekehrt. Dabei weisen sowohl der Schieber als auch der Abstreifer jeweils eine Aufnahme für die elektrischen Kontaktierungen auf.

Vorteilhaft ist aufgrund der Kontaktierungsaufnahmen eine Beschädigung der elektrischen Kontaktierungen beim zueinander fluchtenden Ausrichten der Anoden und der Kathoden bzw. im Zuge des Überführens der Anoden und der Kathoden aus der Aufnahme vermieden oder eine Gefahr dessen zumindest verringert.

Nachfolgend wird ein Ausführungsbeispiel der Erfindung anhand einer Zeichnung näher erläutert. Darin zeigen:
- Fig. 1: schematisch eine erste Variante einer Vorrichtung zur Herstellung eines Elektrodenstapels, mit einem um eine Drehachse rotatorisch antreibbaren Stapelrad mit Aufnahmen für Monozellen, wobei in eine umfangsseitig durchgehende Aussparung des Stapelrads ein Abstreifarm eingebracht ist, mittels welchem die Monozellen aus den Aufnahmen in ein Stapelfach überführbar sind,
- Fig. 2a: die erste Variante der Vorrichtung schematisch in einer Seitenansicht mit Blickrichtung senkrecht zur Drehachse,
- Fig. 2b: die erste Variante der Vorrichtung schematisch in einer Draufsicht,
- Fig. 3a: eine zweite Variante der Vorrichtung in einer Seitenansicht mit Blickrichtung senkrecht zur Drehachse dessen rotatorisch angetriebenen Stapelrads, wobei bezüglich einer Richtung parallel zur Drehachse vor und nach dem Stapelrad jeweils ein Abstreifarm angeordnet ist, welche als Anschlag für die mittels der Aufnahmen des Stapelrads geförderten Monozellen dienen,
- Fig. 3b: die zweite Variante der Vorrichtung schematisch in einer Draufsicht,
- Fig. 4: in einem Flussdiagramm einen Verfahrensablauf zur Herstellung des Elektrodenstapels, und
- Fig. 5: eine der Monozellen, wobei die Monozelle aus Anoden und Kathoden gebildet ist.

Einander entsprechende Teile und Größen sind in allen Figuren stets mit gleichen Bezugszeichen versehen.

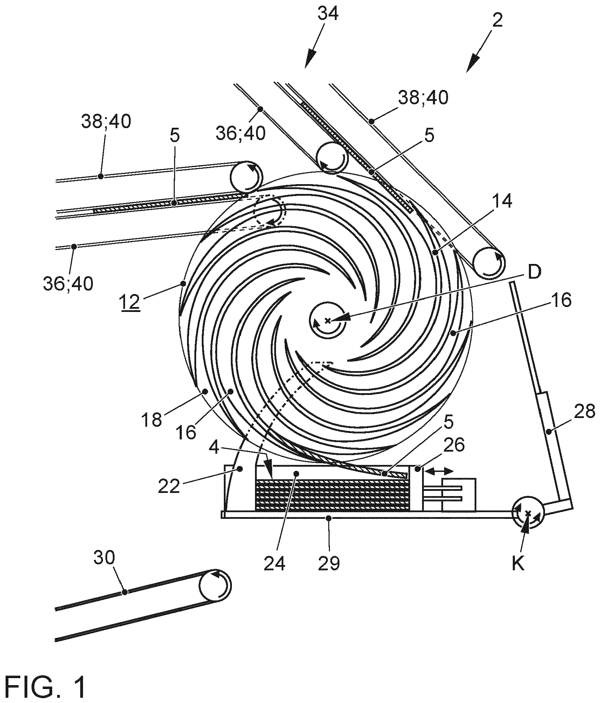

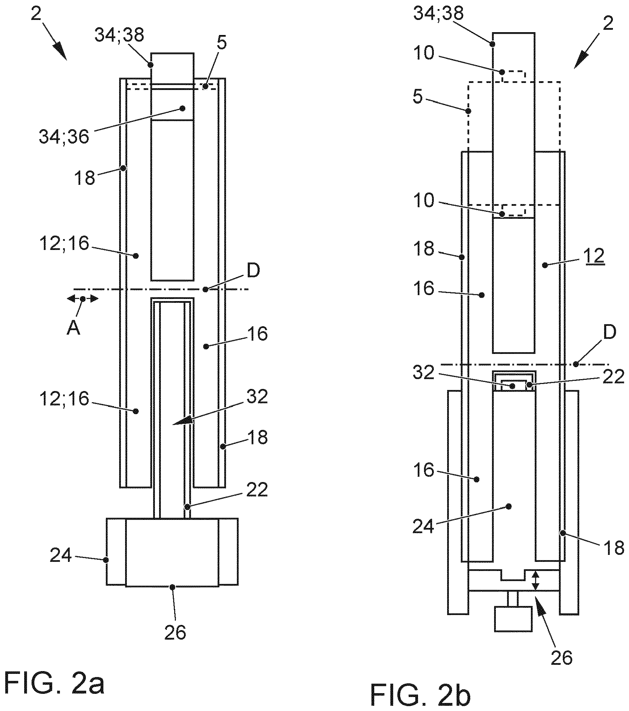

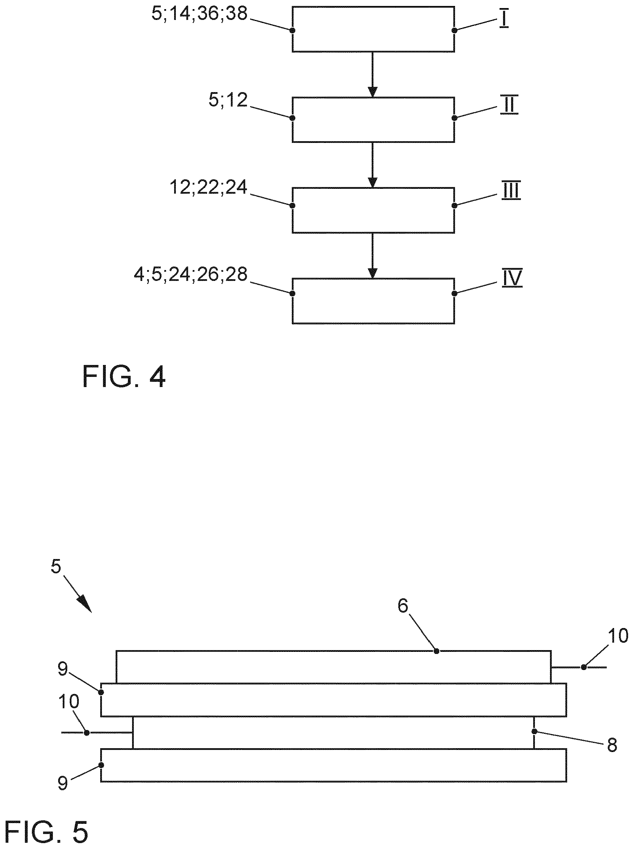

In den Figuren 1 und 2a und 2s ist eine erste Variante einer Vorrichtung 2 dargestellt, welche der Herstellung eines Elektrodenstapels 4 aus Monozellen 5 dient. Eine der Monozellen ist in der Fig. 5 dargestellt. Die Monozelle 5 ist dabei aus einer Anode 6 und einer Kathode 8 gebildet, wobei zwischen der Anode 6 und der Kathode 8 ein Separator 9 angeordnet ist. Weiterhin ist auf der der Anode 6 abgewandten Seite der Kathode 8 ein weiterer Separator 9 angeordnet. Dabei sind die Anode 6, die Kathode 8 sowie die Separatoren 9 mittels Laminieren miteinander gefügt. Die Anoden 6 und die Kathoden 8 sind dabei blattförmig ausgebildet. Des Weiteren weisen die Anode 6 und die Kathode 8 jeweils eine elektrische Kontaktierung 10 auf, welche auch als Tab bezeichnet werden. Zum Zwecke einer verbesserten Übersichtlichkeit ist die Monozelle 5 in den Figuren 1 bis 3b vereinfacht dargestellt.

Der Elektrodenstapel 4 ist dabei für eine nicht weiter dargestellte Lithium-Ionen-Batterie, beispielsweise für eine (Traktions-)Batterie eines elektrisch angetriebenen Kraftfahrzeugs vorgesehen. Die Vorrichtung 2 weist ein Stapelrad 12 auf, welches um eine Drehachse D rotatorisch antreibbar (drehantreibbar) ist.

Das Stapelrad 12 weist umfangsseitig eingebrachte und sich in Axialrichtung A, also entlang der Drehachse D, erstreckende Aufnahmen 14 für die Monozelle 5 auf. Die Aufnahmen 14 sind dabei mittels sich vom Bereich der Drehachse D zur Umfangsseite des Stapelrads 12 hin, also nach außen, erstreckenden Armen 16, welche auch als Schaufeln bezeichnet werden, gebildet. Die Arme 16 und somit auch die Aufnahmen 14 sind in einer Ebene senkrecht zur Drehachse D spiralförmig ausgebildet. Also weisen die Aufnahmen 14 in dieser Ebene einen spiralförmigen Querschnitt auf. Dabei wird eine Krümmung der bogenförmigen Aufnahme von der Umfangsseite zur Drehachse D hin, also mit kleiner werdendem Radialabstand zur Drehachse D, größer. Weiterhin erstrecken sich die Aufnahmen 14 nach außen entgegen der mittels eines entsprechenden Pfeils um die Drehachse D repräsentierten Drehrichtung des Stapelrads 12.

Das Stapelrad 12 weist endseitig bezüglich der Axialrichtung A jeweils eine Wandung 18 auf, welche die Aufnahmen 14 begrenzt. Dabei ist in der Fig. 1 zum Zwecke einer Erkennbarkeit die in Blickrichtung vordere Wandung 18 nicht dargestellt. Die Wandung 18 verhindert eine undefinierte Verstellung der Monozellen 5 in einer Richtung entlang der Drehachse D bei der Rotation des Stapelrads 12 sowie im Zuge der Aufnahme der Monozellen 5 in die Aufnahmen 14.

Wie insbesondere in den Figuren 2a und 2b erkennbar ist, weist das Stapelrad 12 eine umfangsseitige Aussparung 20 auf, welche in Umfangsrichtung des Stapelrads 12 durchgehend ist. Die Aussparung 20 erstreckt sich also in einer Ebene senkrecht zur Drehachse D. Die Aussparung 20 weist des Weiteren eine Ausdehnung entgegen der Radialrichtung R zur Drehachse D auf, welche größer als die Ausdehnung der Aufnahmen 14 in dieser Richtung ist. Somit sind die Arme 16 in Axialrichtung A nicht durchgehend.

In der Aussparung 20 ist ein Abstreifarm 22 angeordnet, wobei in der Fig. 1 derjenige Abschnitt des Abstreifarms 22, welcher innerhalb der Aussparung 20 angeordnet ist, strichpunktiert dargestellt ist. Der Abstreifarm 22 dient als Anschlag für die in den Aufnahmen 14 aufgenommenen Monozellen 5. Bei der Rotation des Stapelrads 12 werden die in den Aufnahmen 14 angeordneten Monozellen 5 gegen den Abstreifarm 22 verstellt, so dass diese gegen eine weitere Förderung mittels des Stapelrad 12 gehalten werden. Aufgrund der weiteren Rotation des Stapelrad 12 werden die Monozellen 5 aus der jeweiligen Aufnahme 14 und in ein im Bereich des Abstreifarms 22 angeordnetes Stapelfach 24 überführt.

Zur zueinander fluchtenden Ausrichtung der Monozellen 5 weist das Stapelfach 24 einen Schieber 26 auf. Dieser ist hierzu zum Abstreifarm 22 hin verfahrbar, was in der Fig. 1 mittels eines Doppelpfeils dargestellt ist. Weiterhin weist das Stapelfach 24 eine Kompressionseinheit 28 zur Erzeugung einer Presskraft auf die im Stapelfach 24 gestapelten und zueinander fluchtend ausgerichteten Monozellen 5 auf. Der Kompressionseinheit 28 ist hierzu durch die Aussparung 20 schwenkbar. Durch das zueinander fluchtende Ausrichten und das miteinander Verpressen der Monozellen 5 wird der Elektrodenstapel 4 gebildet.

Gemäß einer nicht weiter dargestellten Variante des Stapelfachs 24 ist die Kompressionseinheit 28 in Axialrichtung A verstellbar, so dass die Kompressionseinheit 28 nicht durch die Aussparung 20 hindurch geschwenkt, sondern zwischen dem Stapelrad 12 und einem Boden 29 des Stapelfachs 24 verfahren werden kann.

Das Stapelfach 24 ist weiterhin zusammen mit der Kompressionseinheit 28 und mit dem Abstreifarm 22 um eine parallel zur Drehachse D orientierte Kippachse K kippbar, so dass der Elektrodenstapel 4 aus dem Stapelfach entnommen werden und mittels eines Transportbandes 30 abtransportiert werden kann. Mittels des Transportbands 30 kann der Elektrodenstapel 4, also die gegeneinander verpressten Monozellen 5 zur weiteren Herstellung der Batterie oder zu einem Magazin oder einem Lager transportiert werden.

In der Figur 1 ist die Vorrichtung 2 mit Blickrichtung entlang der Drehachse D und in den Figuren 2a und 2b mit Blickrichtung senkrecht zur Drehachse D gezeigt und parallel bzw. senkrecht zum Boden des Stapelfachs 29. Dabei ist in den Figuren 2a und 2b zum Zwecke einer verbesserten Übersichtlichkeit der Abstreifarm 22 vereinfacht dargestellt.

Wie insbesondere in der Fig. 2b zu erkennen ist, weist der Schieber 26 sowie der Abstreifarm 22 jeweils eine Kontaktierungsaufnahme 32 für die elektrischen Kontaktierungen 10 der Anoden 6 und der Kathoden 8 der Monozellen 5 auf.

Des Weiteren weist die Vorrichtung 2 eine Fördereinrichtung 34 zum Fördern der Monozellen 5 in die Aufnahmen 14 des Stapelrads 12 auf. Die Fördereinrichtung 34 weist dabei zwei erste Förderbänder 36 auf, mittels welchen zwei der Monozellen 5 gleichzeitig in die Aufnahmen 14 des Stapelrads 12 gefördert werden können. Weiterhin ist jedem der ersten Förderbänder 36 ein zweites Förderband 38 zugeordnet, wobei das jeweilige zweite Förderband 38 parallel zum zugeordneten ersten Förderband 36 angeordnet ist. Der Fördergurt 40 des jeweiligen zweiten Förderbands 38 weist dabei eine entgegengesetzte Umlaufrichtung zum Fördergurt 40 des zugeordneten ersten Förderbands 36 auf. Die ersten Förderbänder 36 und die zugeordneten zweiten Förderbänder 38 sind jeweils derart zueinander beabstandet, dass die Monozellen 5 bei deren Förderung zwischen dem ersten Förderband 36 und dem entsprechenden zweiten Förderband 38 eingespannt sind.

Die ersten Förderbänder 36 ragen dabei abschnittsweise in die Aussparung 20 des Stapelrads 12, sodass die Monozellen tangential in die Aufnahme 14 gefördert werden. Diejenigen Abschnitte der Förderbänder 36 bzw. 38, welcher in die Aussparung 20 hineinragen, sind dabei strichliniert dargestellt.

Wie insbesondere in der Fig. 2a zu erkennen ist, weisen die ersten Förderbänder 36 und die zweiten Förderbänder 38 in einer Richtung, welche senkrecht zur Förderrichtung und in der mittels deren Fördergurte 40 aufgespannten Ebenen verläuft, eine kleinere Ausdehnung als die Monozellen 5 auf. Mit anderen Worten ragen die Monozellen 5 in Förderbandquerrichtung über die Förderbänder 38 hinaus.

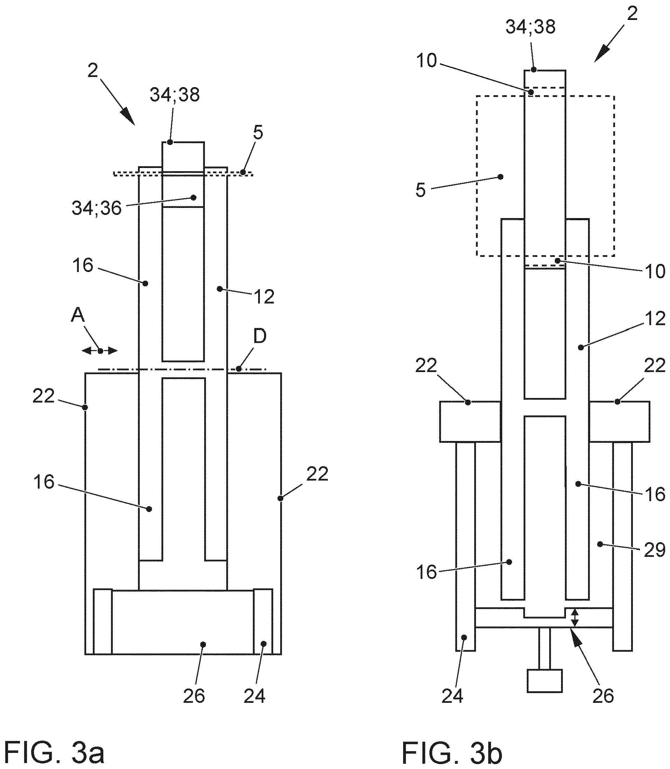

In den Figuren 3a und 3b ist eine zweite Variante der Vorrichtung 2 dargestellt. Mit Ausnahme des im Folgenden dargestellten, gelten für die zweite Variante die oben dargelegten Ausführungen analog und werden hier nicht weiter dargestellt.

Die Vorrichtung 2 weist zwei Abstreifarme 22 auf, welche in Axialrichtung A beidseitig des Stapelrads 12 angeordnet sind. Mit anderen Worten ist einer der beiden Abstreifarme bezüglich der Axialrichtung A vor und der andere Abstreifarm 22 hinter dem Stapelrad 12 angeordnet. Dabei weist das Stapelrad 12 eine kleinere Ausdehnung in Axialrichtung A auf, so dass die in den Aufnahmen 14 aufgenommenen Monozellen 5 in Axialrichtung A beidseitig über das Stapelrad 12 hinausragen. Die beiden Abstreifarme 22 bilden bei einer Rotation des Stapelrads 12 einen Anschlag für die in den Aufnahmen 14 aufgenommenen Monozellen 5. Die Monozellen 5 werden folglich gegen eine weitere Förderung aufgrund der Rotation des Stapelrads 12 gestützt und aus der jeweiligen Aufnahme 14 in das Stapelfach 24 überführt.

Im Vergleich zur ersten Variante weist das Stapelrad 12 also keine Wandung 18 auf, welche die Aufnahmen 14 endseitig bezüglich der Axialrichtung A abschließt.

Die Abstreifarme 22 weisen weiterhin keine Kontaktierungsaufnahme 32 für die elektrischen Kontaktierungen 10 der Anoden oder der Kathoden auf. Vielmehr sind die elektrischen Kontaktierungen 10 zwischen den Armen 16 des Stapelrads angeordnet.

Das in der Fig. 4 gezeigte Flussdiagramm repräsentiert ein Verfahren zur Herstellung eines Elektrodenstapels 4 aus den Monozellen 5. Vorzugsweise wird hierzu eine Vorrichtung 2 gemäß den Figuren 1 und 2 herangezogen.

In einem ersten Schritt I werden die Monozellen 5 in die Aufnahmen 14 des, insbesondere kontinuierlich, rotatorisch angetriebenen Stapelrads 12 gefördert. Hierbei werden mindestens zwei der Monozellen 5 gleichzeitig in die jeweilige Aufnahme 14 des Stapelrads 12 gefördert. Hierzu weist die Vorrichtung 2, wie oben dargelegt, zwei erste Förderbänder 36 auf.

Dabei wird in jeder der Aufnahmen 14 lediglich eine einzige Monozelle aufgenommen, wobei derart in die Aufnahmen 14 eingebracht sind, dass in Umfangsrichtung (Umlaufrichtung) des Stapelrads 12 die Anoden 6 und die Kathoden 8 der Monozellen 5 alternierend angeordnet sind.

Die elektrischen Kontaktierungen 10 der Anoden 6 und der Kathoden 8 der Monozellen 5 sind dabei bezüglich deren Förderrichtung in die jeweilige Aufnahme 14 des Stapelrads 12 vorne bzw. hinten angeordnet. Auf diese Weise sind die elektrischen Kontaktierungen 10 der Anoden 6 und der Kathoden 8 an einander gegenüberliegenden Seiten des Elektrodenstapels 4 angeordnet.

In einem zweiten Schritt II werden die in den Aufnahmen 14 aufgenommenen Monozellen 5 anhand einer Rotation des Stapelrads 12 zu einem Stapelfach 24 gefördert.

In einem dritten Schritt III des Verfahrens werden die Monozellen 5 mittels des Abstreifarms 22 oder mittels der Abstreifarme 22 im Bereich des Stapelfachs 24 gehalten. Also werden die Monozellen 5 mittels des Abstreifarms 22 bzw. mittels der Abstreifarme 22 gegen die Rotation des Stapelrads 12 gehalten (gestützt), sodass die jeweilige Aufnahme 14 aufgrund der Rotation des Stapelrads 12 relativ zur zugeordneten Monozelle 5 verstellt und entsprechend die Monozelle 5 aus der jeweiligen Aufnahme 14 in das Stapelfach 24 überführt wird. Dabei werden die Monozellen alternierend im Stapelfach 24 übereinandergestapelt.

Weiterhin ist die Fördergeschwindigkeit der Monozellen 5 in die jeweilige Aufnahme 14 des Stapelrads 12 derart eingestellt, dass die Monozellen 5 zeitlich vor dem Halten durch den Abstreifarm 22 oder die Abstreifarme 22 aufgrund einer Reibung zwischen den Monozellen 5 und der jeweiligen Aufnahme 14 relativ zu dieser in den Stillstand abgebremst wird. Die Einstellung der Fördergeschwindigkeit erfolgt dabei in Abhängigkeit der Form der Aufnahmen 14. Aufgrund der Spiralform der Aufnahmen 14 wird eine Reibungskraft zwischen der jeweiligen Aufnahme 14 und der Monozelle 5 zum (drehachsenseitigen) der Drehachse D zugewandten Ende der Aufnahme 14 größer.

In einem vierten Schritt IV werden unter Bildung des Elektrodenstapels 4 die gestapelten Monozellen 5 im Stapelfach 24 mittels des Schiebers 26 fluchtend zueinander ausgerichtet und mittels der Kompressionseinheit 28 gegeneinander verpresst. Hierzu wirkt die Kompressionseinheit 28 mit einer Presskraft auf die im Stapelfach 24 gestapelten und fluchtend zueinander ausgerichteten Monozellen 5 ein.

Die Erfindung ist nicht auf das vorstehend beschriebene Ausführungsbeispiel beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Vorrichtung
- 4: Elektrodenstapel
- 5: Monozelle
- 6: Anode
- 8: Kathode
- 9: Separator
- 10: elektrische Kontaktierung der Elektrode
- 12: Stapelrad
- 14: Aufnahme
- 16: Arm
- 18: Wandung
- 20: Aussparung
- 22: Abstreifarm
- 24: Stapelfach
- 26: Schieber
- 28: Kompressionseinheit
- 29: Boden des Stapelfachs
- 30: Transportband
- 32: Kontaktierungsaufnahmen
- 34: Fördereinrichtung
- 36: erstes Förderband
- 38: zweites Förderband
- 40: Fördergurt

- I: Fördern der Monozellen in die Aufnahmen des Stapelrads
- II: Fördern der Monozellen zum Stapelfach mittels des Stapelrads
- III: Überführen Monozellen aus der Aufnahme in das Stapelfach
- IV: Gegeneinander Verpressen der Monozellen
- A: Axialrichtung
- D: Drehachse
- K: Kippachse

## Patentansprüche

1. Verfahren zur Herstellung eines Elektrodenstapels (4) aus Monozellen (5) für eine Lithium-Ionen-Batterie, insbesondere eines elektrisch angetriebenen Kraftfahrzeugs, wobei die Monozellen (5) jeweils aus einer Anode (6) und einer Kathode (8) gebildet sind,
- bei dem die Monozellen (5) in Aufnahmen (14) eines rotatorisch angetriebenen oder rotatorisch antreibbaren Stapelrads (12) gefördert werden,
- bei dem die in den Aufnahmen (14) aufgenommenen Monozellen (5) anhand einer Rotation des Stapelrads (12) zu einem Stapelfach (24) gefördert werden,
- bei dem die Monozellen (5) mittels eines Abstreifarms (22) im Bereich des Stapelfachs (24) gehalten und aufgrund der Rotation des Stapelrads (12) aus der jeweiligen Aufnahme (14) in das Stapelfach (24) überführt werden, wobei die Monozellen (5) im Stapelfach (24) gestapelt werden, und
- bei dem die gestapelten Monozellen (5) im Stapelfach (24) gegeneinander verpresst werden.

2. Verfahren nach Anspruch 1,
**dadurch gekennzeichnet,**
**dass** mindestens zwei der Monozellen (5) gleichzeitig in die entsprechenden Aufnahmen (14) des Stapelrads (12) gefördert werden.

3. Verfahren nach Anspruch 1 oder 2,
**dadurch gekennzeichnet,**
**dass** die Fördergeschwindigkeit der Monozellen (5) in die jeweiligen Aufnahmen (14) des Stapelrads (12) derart eingestellt ist, dass die Monozellen (5) zeitlich vor dem Halten durch den Abstreifarm (22) aufgrund einer Reibung relativ zur jeweiligen Aufnahme (14) in einen Stillstand abgebremst werden.

4. Vorrichtung (2) zur Herstellung eines Elektrodenstapels (4) aus Monozellen (5) für eine Lithium-Ionen-Batterie, insbesondere gemäß dem Verfahren nach einem der Ansprüche 1 bis 3, aufweisend
- ein um eine Drehachse (D) rotatorisch antreibbares Stapelrad (12) mit umfangsseitig eingebrachten und sich in Axialrichtung (A) erstreckenden Aufnahmen (14) für die Monozellen (5),
- eine Fördereinrichtung (34) zum Fördern der Monozellen (5) in die Aufnahmen (14) des Stapelrads (12),
- einen Abstreifarm (22), welcher in eine in Umfangsrichtung des Stapelrades (12) durchgehende Aussparung (20) einbringbar ist, und welcher bei einer Rotation des Stapelrads (12) einen Anschlag für die in den Aufnahmen (14) aufgenommenen Monozellen (5) bildet, so dass die Monozellen (5) aufgrund der Rotation des Stapelrads (12) aus der jeweiligen Aufnahme (14) in ein Stapelfach (24) überführt werden, oder
- zwei Abstreifarme (22), welche in Axialrichtung (A) beidseitig des Stapelrads (12) angeordnet sind, wobei das Stapelrad (12) eine kleinere Ausdehnung in Axialrichtung (A) aufweist als die Monozellen (5), so dass die Abstreifarme (22) bei einer Rotation des Stapelrads (12) einen Anschlag für die in den Aufnahmen (14) aufgenommenen und in Axialrichtung (A) aus den Aufnahmen (14) hinausragenden Monozellen (5) bilden und die Monozellen (5) aufgrund der Rotation des Stapelrads (12) aus der jeweiligen Aufnahme (14) in ein Stapelfach (24) überführt werden, und
- wobei das Stapelfach (24) eine Kompressionseinheit (28) zur Erzeugung einer Presskraft auf die im Stapelfach (24) gestapelten Monozellen (5) aufweist.

5. Vorrichtung (2) nach Anspruch 4,
**dadurch gekennzeichnet,**
**dass** die Aufnahmen (14) in einer Ebene senkrecht zur Drehachse (D) bogenförmig, insbesondere spiralförmig, ausgebildet sind.

6. Vorrichtung (2) nach Anspruch 4 oder 5,
**dadurch gekennzeichnet,**
**dass** die Fördereinrichtung (34) zum Fördern der Monozellen (5) in die Aufnahmen (14) des Stapelrads (12) mindestens zwei erste Förderbänder (36) aufweist.

7. Vorrichtung (2) nach Anspruch 6,
**dadurch gekennzeichnet,**
**dass** für jedes der ersten Förderbänder (36) ein parallel orientiertes zweites Förderband (38) mit zum zugeordneten ersten Förderband (36) entgegengesetzter Umlaufrichtung vorgesehen ist, so dass Monozellen (5) beim deren Fördervorgang zwischen dem ersten Förderband (36) und dem zweiten Förderband (38) eingespannt sind.

8. Vorrichtung (2) nach Anspruch 7,
**dadurch gekennzeichnet,**
**dass** die ersten Förderbänder (36) und/oder die zweiten Förderbänder (38) in die oder eine Aussparung (20) des Stapelrads (12) hineinragen, sodass die Monozellen (5) tangential in die Aufnahme (14) gefördert werden.

9. Vorrichtung (2) nach einem der Ansprüche 4 bis 8,
**dadurch gekennzeichnet,**
**dass** das Stapelfach (24) zur Entnahme des Elektrodenstapels (4), insbesondere zusammen mit der Kompressionseinheit (28), verfahrbar und/oder um eine zur Drehachse (D) parallele Kippachse (K) kippbar ist.

10. Vorrichtung (2) nach einem der Ansprüche 4 bis 9,
**dadurch gekennzeichnet,**
**dass** ein zur zueinander fluchtenden Ausrichtung der Monozellen (5) vorgesehener Schieber (26) des Stapelfachs (24) und/oder der Abstreifarm (22) jeweils eine Kontaktierungsaufnahme (32) für elektrische Kontaktierungen (10) der Anoden (6) und der Kathoden (8) der Monozelle (5) aufweist.

## Claims

1. Method for producing an electrode stack (4) from monocells (5) for a lithium-ion battery, in particular of an electrically driven motor vehicle, the monocells (5) each being formed from an anode (6) and a cathode (8),
- wherein the monocells (5) are conveyed into receptacles (14) of a rotationally driven or rotationally drivable stacking wheel (12),
- wherein the monocells (5) accommodated in the receptacles (14) are conveyed to a stacking compartment (24) by means of a rotation of the stacking wheel (12),
- wherein the monocells (5) are held in the region of the stacking compartment (24) by means of a stripper arm (22) and are transferred from the respective receptacle (14) into the stacking compartment (24) due to the rotation of the stacking wheel (12), the monocells (5) being stacked in the stacking compartment (24), and
- wherein the stacked monocells (5) are pressed against each other in the stacking compartment (24).

2. Method according to claim 1,
**characterized in**
**that** at least two of the monocells (5) are conveyed simultaneously into the corresponding receptacles (14) of the stacking wheel (12).

3. Method according to claim 1 or 2,
**characterized in**
**that** the speed of conveying the monocells (5) into the respective receptacles (14) of the stacking wheel (12) is adjusted in such a way that the monocells (5) are decelerated to a standstill before being held by the stripper arm (22) due to friction relative to the respective receptacle (14).

4. Device (2) for producing an electrode stack (4) from monocells (5) for a lithium-ion battery, in particular according to the method of one of claims 1 to 3, comprising
- a stacking wheel (12), which can be driven to rotate about an axis of rotation (D), with circumferentially introduced receptacles (14) extending in the axial direction (A) for the monocells (5),
- a conveying device (34) for conveying the monocells (5) into the receptades (14) of the stacking wheel (12),
- a stripper arm (22), which can be inserted into a recess (20) passing through in the circumferential direction of the stacking wheel (12) and which, during a rotation of the stacking wheel (12), forms a stop for the monocells (5) accommodated in the receptacles (14), such that the monocells (5) are transferred out of the respective receptacle (14) into a stacking compartment (24) due to the rotation of the stacking wheel (12), or
- two stripper arms (22), which are arranged on both sides of the stacking wheel (12) in the axial direction (A), the stacking wheel (12) having a smaller extension in the axial direction (A) than the monocells (5), such that, during a rotation of the stacking wheel (12), the stripper arms (22) form a stop for the monocells (5) accommodated in the receptacles (14) and protruding from the receptacles (14) in an axial direction (A), and the monocells (5) are transferred out of the respective receptacle (14) into a stacking compartment (24) due to the rotation of the stacking wheel (12), and
- wherein the stacking compartment (24) has a compression unit (28) for generating a pressing force on the monocells (5) stacked in the stacking compartment (24).

5. Device (2) according to claim 4,
**characterized in**
**that** the receptacles (14) are arcuate, in particular spiral-shaped, in a plane perpendicular to the axis of rotation (D).

6. Device (2) according to claim 4 or 5,
**characterized in**
**that** the conveying device (34) for conveying the monocells (5) into the receptacles (14) of the stacking wheel (12) has at least two first conveyor belts (36).

7. Device (2) according to claim 6,
**characterized in**
**that** for each of the first conveyor belts (36) a parallel oriented second conveyor belt (38) is provided with the opposite direction of rotation to the associated first conveyor belt (36), such that monocells (5) are clamped during their conveying process between the first conveyor belt (36) and the second conveyor belt (38).

8. Device (2) according to claim 7,
**characterized in**
**that** the first conveyor belts (36) and/or the second conveyor belts (38) project into the or a recess (20) of the stacking wheel (12), such that the monocells (5) are conveyed tangentially into the receptacle (14).

9. Device (2) according to one of claims 4 to 8,
**characterized in**
**that** the stacking compartment (24) can be moved and/or tilted about a tilting axis (K) parallel to the axis of rotation (D), in particular together with the compression unit (28), in order to remove the stack of electrodes (4).

10. Device (2) according to one of claims 4 to 9,
**characterized in**
**that** a slide (26), provided for orienting the monocells (5) in alignment with each other, of the stacking compartment (24) and/or the stripper arm (22) each has a contacting recess (32) for electrical contacts (10) of the anodes (6) and the cathodes (8) of the monocell (5).

## Revendications

1. Procédé de fabrication d'un empilement d'électrodes (4) constitué de monocellules (5) pour une batterie au lithium-ion, notamment d'un véhicule automobile à propulsion électrique, les monocellules (5) étant formées chacune d'une anode (6) et d'une cathode (8),
- dans lequel les monocellules (5) sont transportées dans des réceptacles (14) d'une roue d'empilage (12) entraînée en rotation ou pouvant être entraînée en rotation,
- dans lequel les monocellules (5) logées dans les réceptacles (14) sont transportées vers un compartiment d'empilage (24) au moyen d'une rotation de la roue d'empilage (12),
- dans lequel les monocellules (5) sont maintenues au moyen d'un bras de raclage (22) dans la zone du compartiment d'empilage (24) et sont transférées, en raison de la rotation de la roue d'empilage (12), hors du réceptacle (14) respectif dans le compartiment d'empilage (24), les monocellules (5) étant empilées dans le compartiment d'empilage (24), et
- dans lequel les monocellules (5) empilées sont pressées les unes contre les autres dans le compartiment d'empilage (24).

2. Procédé selon la revendication 1,
**caractérisé en ce**
**qu'**au moins deux des monocellules (5) sont transportées simultanément dans les réceptacles (14) correspondants de la roue d'empilage (12).

3. Procédé selon la revendication 1 ou 2,
**caractérisé en ce**
**que** la vitesse de transport des monocellules (5) dans les logements respectifs (14) de la roue d'empilage (12) est réglée de telle sorte que les monocellules (5) sont freinées dans un arrêt avant d'être maintenues par le bras de raclage (22) en raison d'un frottement par rapport au réceptacle (14) respectif.

4. Dispositif (2) de fabrication d'un empilement d'électrodes (4) constitué de monocellules (5) pour une batterie lithium-ion, notamment selon le procédé de l'une des revendications 1 à 3, comportant
- une roue d'empilage (12) pouvant être entraînée en rotation autour d'un axe de rotation (D), avec des réceptacles (14) pour les monocellules (5), ménagés sur la périphérie et s'étendant dans la direction axiale (A),
- un dispositif de transport (34) pour transporter les monocellules (5) dans les réceptacles (14) de la roue d'empilage (12),
- un bras de raclage (22) qui peut être introduit dans un évidement (20) continu dans la direction périphérique de la roue d'empilage (12) et qui, lors d'une rotation de la roue d'empilage (12), forme une butée pour les monocellules (5) reçues dans les réceptacles (14), de sorte que les monocellules (5) sont transférées, en raison de la rotation de la roue d'empilage (12), hors du réceptacle (14) respectif dans un compartiment d'empilage (24), ou
- deux bras de raclage (22) qui sont disposés dans la direction axiale (A) de part et d'autre de la roue d'empilage (12), la roue d'empilage (12) comprenant une extension dans la direction axiale (A) inférieure à celle des monocellules (5), de sorte que les bras de raclage (22) forment, lors d'une rotation de la roue d'empilage (12), une butée pour les monocellules (5) logées dans les réceptacles (14) et dépassant des réceptacles (14) dans la direction axiale (A), et que les monocellules (5) sont transférées, en raison de la rotation de la roue d'empilage (12), hors du logement respectif (14) dans un compartiment d'empilage (24), et
- dans lequel le compartiment d'empilage (24) a une unité de compression (28) pour générer une force de pression sur les monocellules (5) empilées dans le compartiment d'empilage (24).

5. Dispositif (2) selon la revendication 4,
**caractérisé en ce**
**que** les réceptacles (14) sont réalisés en forme d'arc, en particulier en forme de spirale, dans un plan perpendiculaire à l'axe de rotation (D).

6. Dispositif (2) selon la revendication 4 ou 5,
**caractérisé en ce**
**que** le dispositif de transport (34) comprend au moins deux premières bandes transporteuses (36) pour transporter les monocellules (5) dans les réceptacles (14) de la roue d'empilage (12).

7. Dispositif (2) selon la revendication 6,
**caractérisé en ce**
**que**, pour chacune des premières bandes transporteuses (36), il est prévu une deuxième bande transporteuse (38) orientée parallèlement avec un sens de rotation opposé à la première bande transporteuse (36) associée, de sorte que des monocellules (5) sont serrées entre la première bande transporteuse (36) et la deuxième bande transporteuse (38) lors de leur processus de transport.

8. Dispositif (2) selon la revendication 7,
**caractérisé en ce**
**que** les premières bandes transporteuses (36) et/ou les deuxièmes bandes transporteuses (38) font saillie dans le ou un évidement (20) de la roue d'empilage (12), de sorte que les monocellules (5) sont transportées tangentiellement dans le réceptacle (14).

9. Dispositif (2) selon l'une des revendications 4 à 8,
**caractérisé en ce**
**que** le compartiment de pile (24) peut être déplacé pour le prélèvement de la pile d'électrodes (4), en particulier conjointement avec l'unité de compression (28), et/ou peut être basculé autour d'un axe de basculement (K) parallèle à l'axe de rotation (D).

10. Dispositif (2) selon l'une des revendications 4 à 9,
**caractérisé en ce**
**qu'**un coulisseau (26) du compartiment d'empilement (24) prévu pour l'alignement mutuel des monocellules (5) et/ou le bras de raclage (22) comprend respectivement un logement de mise en contact (32) pour des mises en contact électriques (10) des anodes (6) et des cathodes (8) de la monocellule (5).
